# EUROPEAN PATENT APPLICATION

(11) **EP 2 682 300 A1**
(43) Date of publication of application: **08.01.2014**
(21) Application number: 11859977.8
(22) Date of filing: 03.03.2011
(51) Int. Cl.: B60L 11/18, B60K 20/02, F16H 63/34

(54) **SHIFT-LOCK APPARATUS FOR VEHICLE**

(71) Applicant: Toyota Jidosha Kabushiki Kaisha, Toyota-shi, Aichi 471-8571 (JP)
(72) Inventor: GOTO, Yoshihiko, Toyota-shi, Aichi 471-8571 (JP); KOSUGI, Toshihiko, Toyota-shi, Aichi 471-8571 (JP); MASUDA, Tomokazu, Toyota-shi, Aichi 471-8571 (JP); TSURUTA, Hiroshi, Niwa-gun, Aichi 480-0195 (JP)
(74) Representative: Winter, Brandl, Fürniss, Hübner, Röss, Kaiser, Polte - Partnerschaft
(86) International application number: PCT/JP2011/054890
(87) International publication number: WO 2012/117550

(57) **Abstract**

A PHV-ECU (210) includes a power supply node (212), a switch (214) and a CPU (216). A voltage is applied to the power supply node (212) in accordance with a signal (IG) rendered active. When determining based on a connection state signal (CNCT) that a charging cable is unconnected or abnormal, the CPU (216) turns on the switch (214). A shift-lock ECU (220) includes output ports (222, 224) and a switch (230). A shift-lock solenoid (63) of a lock release mechanism (62) is connected between the output ports (222, 224). When a brake signal (BR) is rendered active, the switch (230) is turned on.

## Description

### TECHNICAL FIELD

The present invention relates to a shift-lock apparatus for a vehicle, and particularly to a shift-lock apparatus that prohibits a position change from a parking position in a vehicle configured such that a vehicle-mounted power storage device can be charged through a charging cable by a power supply external to the vehicle.

### BACKGROUND ART

An electric vehicle, a hybrid vehicle, a fuel cell vehicle and the like have been known as an electric powered vehicle configured such that a motor for driving the vehicle can be driven by using electric power stored in a vehicle-mounted power storage device typified by a secondary battery. As to these electric powered vehicles, such a configuration has been proposed that the power storage device is charged through a charging cable by a power supply external to the vehicle (hereinafter also simply referred to as "external power supply", and further, charging of the power storage device by the external power supply will be also simply referred to as "external charging").

Japanese Patent Laying-Open No. 10-178701 discloses an abnormality detecting apparatus that prevents abnormalities of a charging cable (theft or disconnection of connectors) occurring due to mischief and the like during charging of an electric vehicle. In this abnormality detecting apparatus, a connection state of the connector of the charging cable on the vehicle side is detected by a limit switch. When the security for theft prevention is operated by a theft preventing ECU, the limit switch operates and an alarm is issued when disconnection of the connector is detected. By doing this, the abnormality of the charging cable due to mischief and the like can be prevented (refer to PTD 1).

### CITATION LIST

### PATENT DOCUMENT

PTD 1: Japanese Patent Laying-Open No. 10-178701
PTD 2: Japanese Patent Laying-Open No. 9-322313

### SUMMARY OF INVENTION

### TECHNICAL PROBLEM

The aforementioned abnormality detecting apparatus cannot, however, prevent breakage of the charging cable and the vehicle when a user of the vehicle forgets to disconnect the connector of the charging cable and moves the vehicle.

Accordingly, an object of the present invention is to, in a vehicle configured such that a vehicle-mounted power storage device can be charged through a charging cable by an external power supply, prevent the vehicle from running while the charging cable remains connected to the vehicle.

### SOLUTION TO PROBLEM

According to the present invention, a shift-lock apparatus for a vehicle is a shift-lock apparatus for a vehicle including a shift selecting mechanism for selecting one of a plurality of shift positions including a parking position. The shift-lock apparatus for a vehicle includes an interlock device and a control unit. The vehicle is configured such that a vehicle-mounted power storage device can be charged through a charging cable by an external power supply. The interlock device prohibits a position change from the parking position in the shift selecting mechanism. The control unit outputs a command for permitting the position change to the interlock device when the vehicle is started and a brake pedal of the vehicle is operated and connection between the charging cable and the vehicle is undetected.

Preferably, the vehicle can operate in a running mode or in a charging mode. An operation mode is switched to the charging mode when charging of the power storage device by the external power supply is requested. The operation mode is switched to the running mode when running of the vehicle is requested. The control unit stops output of the command to the interlock device when the operation mode is the charging mode.

More preferably, when determining that a connection state between the charging cable and the vehicle is abnormal, the control unit outputs an alarm for notifying a user that the connection state is abnormal, and the control unit outputs the command to the interlock device when the vehicle is started and the brake pedal is operated in a case where it is determined that the connection state is abnormal.

More preferably, the interlock device includes a lock mechanism and a lock release mechanism. The lock mechanism blocks movement of a shift lever from the parking position. The lock release mechanism releases, by receiving current supply, blockage of movement of the shift lever by the lock mechanism. The control unit supplies a current to the lock release mechanism when the vehicle is started and the brake pedal is operated and connection between the charging cable and the vehicle is undetected.

More preferably, the control unit includes a first and a second electronic control devices. The first electronic control device receives a first state signal indicating whether the operation mode is the charging mode or not and a second state signal indicating whether the charging cable has been connected to the vehicle or not. The second electronic control device receives a third state signal indicating whether the brake pedal has been operated or not. The first electronic control device supplies the current to the second electronic control device when, during startup of the vehicle, the first state signal indicates that the operation mode is not the charging mode and the second state signal indicates that the charging cable and the vehicle are not connected. The second electronic control device supplies the current to the lock release mechanism when the second electronic control device receives the current supply from the first electronic control device and the third state signal indicates that the brake pedal has been operated.

Preferably, the control unit includes a first and a second electronic control devices. The first electronic control device receives a first state signal indicating whether the operation mode is the charging mode or not, a second state signal indicating whether the charging cable has been connected to the vehicle or not, and a third state signal indicating whether the brake pedal has been operated or not. The second electronic control device receives a signal from the first electronic control device. The first electronic control device renders the signal outputted to the second electronic control device active when the first state signal indicates that the operation mode is not the charging mode, and the second state signal indicates that the charging cable and the vehicle are not connected, and the third state signal indicates that the brake pedal has been operated. The second electronic control device supplies the current to the lock release mechanism when the signal received from the first electronic control device is rendered active during startup of the vehicle.

Preferably, the control unit includes an electronic control device. The electronic control device receives a first state signal indicating whether the operation mode is the charging mode or not, a second state signal indicating whether the charging cable has been connected to the vehicle or not, and a third state signal indicating whether the brake pedal has been operated or not. The electronic control device supplies the current to the lock release mechanism when, during startup of the vehicle, the first state signal indicates that the operation mode is not the charging mode, and the second state signal indicates that the charging cable and the vehicle are not connected, and the third state signal indicates that the brake pedal has been operated.

Preferably, the shift-lock apparatus for a vehicle further includes an operation unit. The operation unit mechanically releases prohibition of the position change by the interlock device in accordance with user's operation.

### ADVANTAGEOUS EFFECTS OF INVENTION

In the present invention, the command for permitting the position change is outputted to the interlock device when the vehicle is started and the brake pedal of the vehicle is operated and connection between the charging cable and the vehicle is undetected. As a result, when connection between the charging cable and the vehicle is detected, the command for permitting the position change is not outputted to the interlock device and the position change from the parking position is prohibited, even if the vehicle is started and the brake pedal of the vehicle is operated.

Therefore, according to the present invention, running of the vehicle while the charging cable remains connected to the vehicle can be prevented.

### BRIEF DESCRIPTION OF DRAWINGS

Fig. 1 is an overall block diagram of a vehicle including a shift-lock apparatus according to a first embodiment of the present invention.
Fig. 2 is a diagram showing a configuration of a shift selecting unit shown in Fig. 1.
Fig. 3 is a functional block diagram of a control device shown in Fig. 1.
Fig. 4 is a diagram showing a specific configuration of the control device about a portion related to shift-lock control.
Fig. 5 is a flowchart for describing the operation of a CPU shown in Fig. 4.
Fig. 6 is a flowchart for describing a modification of the operation of the CPU.
Fig. 7 is a diagram showing a specific configuration of a control device about a portion related to the shift-lock control in a second embodiment.
Fig. 8 is a flowchart for describing the operation of a CPU shown in Fig. 7.
Fig. 9 is a diagram showing a specific configuration of a control device about a portion related to the shift-lock control in a third embodiment.

### DESCRIPTION OF EMBODIMENTS

Embodiments of the present invention will be described in detail hereinafter with reference to the drawings, in which the same or corresponding portions are denoted by the same reference characters and description thereof will not be repeated.

### [First Embodiment]

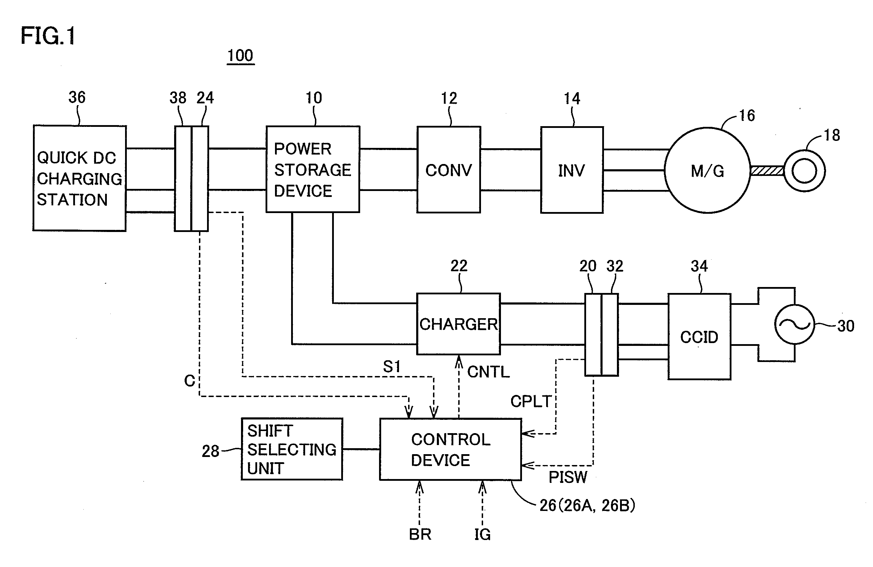

Fig. 1 is an overall block diagram of a vehicle including a shift-lock apparatus according to a first embodiment of the present invention. Referring to Fig. 1, a vehicle 100 includes a power storage device 10, a converter 12, an inverter 14, a motor generator 16, and a driving wheel 18. Vehicle 100 further includes an inlet 20, a charger 22, a quick DC charging inlet 24, a control device 26, and a shift selecting unit 28.

Power storage device 10 is a rechargeable DC power supply and is configured, for example, by a secondary battery such as a lithium ion battery, a nickel-metal hydride battery or a lead storage battery, an electric double layer capacitor and the like. Power storage device 10 is charged by an external AC power supply 30 by using charger 22. Power storage device 10 can also be charged by a quick DC charging station 36. Furthermore, power storage device 10 stores electric power generated by motor generator 16 during braking of vehicle 100 and the like. Power storage device 10 supplies the stored electric power to converter 12.

Converter 12 is arranged between power storage device 10 and inverter 14. Converter 12 boosts a DC voltage outputted to inverter 14 into a voltage of power storage device 10 or a higher voltage. Converter 12 is configured, for example, by a DC chopper circuit of a current reversible type.

Inverter 14 is arranged between converter 12 and motor generator 16. Inverter 14 converts DC power supplied from converter 12 into AC power for driving motor generator 16. Inverter 14 also converts AC power generated by motor generator 16 into DC power and outputs the DC power to converter 12. Inverter 14 is configured, for example, by a bridge circuit including switching elements of three phases.

Motor generator 16 is an AC rotating electric machine and is configured, for example, by a permanent magnet-type synchronous motor including a rotor having a permanent magnet embedded therein. Output torque of motor generator 16 is transmitted to driving wheel 18. During braking of vehicle 100 and the like, motor generator 16 can generate electric power by receiving rotational force of driving wheel 18, and the generated electric power is converted into a charging voltage for power storage device 10 by inverter 14 and converter 12.

Although not particularly shown, vehicle 100 may be configured as a hybrid vehicle by connecting another inverter to inverter 14 in parallel, and further providing another motor generator driven by this inverter and an engine that can provide rotational torque to this motor generator. Alternatively, vehicle 100 may be configured as a one motor-type hybrid vehicle in which a not-shown engine is used as a main power source and motor generator 16 assists the engine as necessary, and motor generator 16 is also used as a generator to allow charging of power storage device 10.

Inlet 20 is provided on the body of vehicle 100 and is configured to be connectable to a connector 32 of a charging cable connected to external AC power supply 30. Inlet 20 includes a proximity switch (not shown) operated when connector 32 is connected thereto, and outputs, to control device 26, a connector connection signal PISW indicating whether connector 32 is connected or not.

The charging cable is provided with a charging circuit interrupt device (also referred to as "CCID") 34 for switching between power feeding and interruption of power feeding from external AC power supply 30 to vehicle 100. This CCID 34 includes an interrupter and generates a pilot signal CPLT outputted to control device 26 of vehicle 100 through connector 32 and inlet 20. Pilot signal CPLT is used to transmit information about external AC power supply 30 and the charging cable and to transmit the state of vehicle 100 to CCID 34 by manipulating a potential of pilot signal CPLT on the vehicle 100 side.

Charger 22 is arranged between inlet 20 and power storage device 10. Charger 22 is controlled in accordance with a control signal CNTL from control device 26, and converts AC power inputted from inlet 20 into a charging voltage and outputs the power to power storage device 10. Charger 22 is configured, for example, by an AC/DC converter including an insulating transformer.

Quick DC charging inlet 24 is provided on the body of vehicle 100 and is configured to be connectable to a connector 38 of a charging cable connected to quick DC charging station 36. Quick DC charging inlet 24 includes a proximity switch (not shown) operated when connector 38 is connected thereto, and outputs, to control device 26, a connector connection signal C indicating whether connector 38 is connected or not. Quick DC charging inlet 24 also receives, from connector 38, a signal S1 outputted from quick DC charging station 36 and outputs signal S1 to control device 26. Similarly to pilot signal CPLT, signal S1 is used to exchange information between quick DC charging station 36 and vehicle 100.

In accordance with the driver's operation of a shift lever (not shown), shift selecting unit 28 selects one of a plurality of shift positions including a parking position. In addition, shift selecting unit 28 has a shift-lock apparatus for prohibiting a position change from the parking position in accordance with conditions. The configuration of this shift selecting unit 28 will be described in detail later.

Control device 26 is configured by an electronic control unit (ECU). By software processing performed by a CPU (Central Processing Unit) executing prestored programs and/or by hardware processing performed by a dedicated electronic circuit, control device 26 executes control of charging of power storage device 10 by charger 22 or quick DC charging station 36 and control of the shift-lock apparatus in shift selecting unit 28.

The control of the shift-lock apparatus in shift selecting unit 28 will be described. Specifically, control device 26 controls the shift-lock apparatus to permit the position change from the parking position by the shift-lock apparatus when startup of vehicle 100 is detected in accordance with a signal IG indicating the state of an ignition key (a start switch or the like for starting a vehicle system may be used and the same is applied to the description below) and the operation (press-down) of a brake pedal is detected in accordance with a brake signal BR and connection between vehicle 100 and the charging cable of each of external AC power supply 30 and the quick DC charging station is undetected. In other words, when connection between vehicle 100 and the charging cable of either external AC power supply 30 or quick DC charging station 36 is detected, the position change from the parking position by the shift-lock apparatus is not permitted and the position change from the parking position is prohibited, even if vehicle 100 is started and the operation of the brake pedal is detected. As a result, start of running of vehicle 100 while the charging cable remains connected is prevented.

The configurations of shift selecting unit 28 and control device 26, which are the main parts of the present invention, will be described hereinafter.

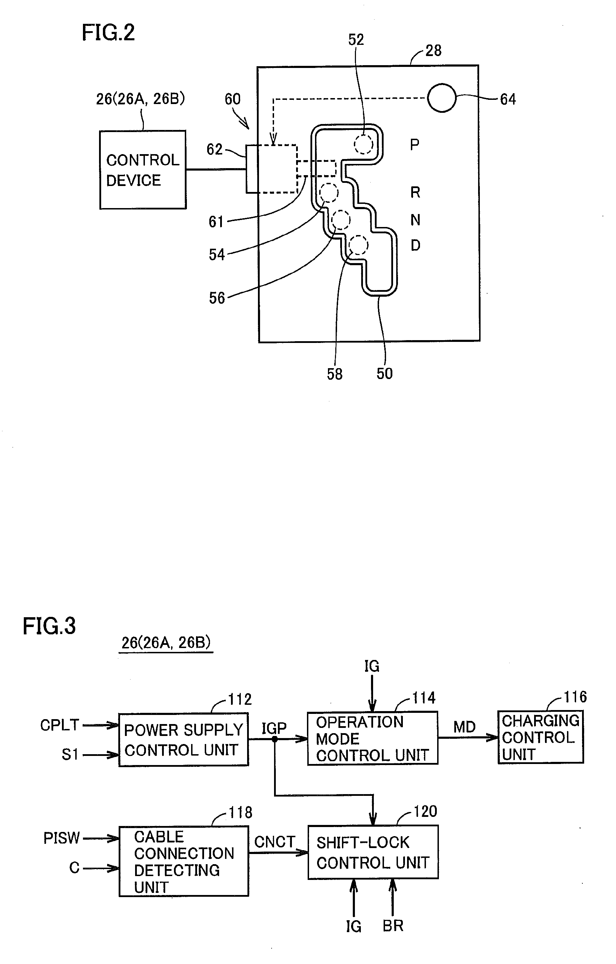

Fig. 2 is a diagram showing the configuration of shift selecting unit 28 shown in Fig. 1. Referring to Fig. 2, shift selecting unit 28 includes a lever guide path 50, an interlock device 60 and a lock release button 64.

Lever guide path 50 is for guiding the movement of the shift lever (not shown) operated by the driver. One shift position is selected from the plurality of shift positions in accordance with a position of the shift lever in lever guide path 50. Specifically, lever guide path 50 is provided with a position sensor (not shown) for detecting which of the defined lever positions (lever positions 52 to 58 as one example) the shift lever is located at. In accordance with an output of the position sensor, one shift position is selected from the parking position (P position) corresponding to lever position 52, a rearward drive position (R position) corresponding to lever position 54, a neutral position (N position) corresponding to lever position 56, and a forward drive position (D position) corresponding to lever position 58.

Interlock device 60 includes a lock mechanism 61 and a lock release mechanism 62. Lock mechanism 61 is configured by a lock shaft protruding between the P position and the R position in lever guide path 50, and prohibits the movement of the shift lever from the P position to the R position when the P position is selected (shift-lock).

Lock release mechanism 62 includes a not-shown solenoid (shift-lock solenoid), passage of electric current through which is controlled by control device 26. Upon receiving current supply from control device 26, lock release mechanism 62 moves lock mechanism 61 to outside lever guide path 50 by electromagnetic force generated at the shift-lock solenoid. In other words, when the current is supplied from control device 26 to interlock device 60, the shift-lock by lock mechanism 61 is released by lock release mechanism 62 and the shift lever can be moved from the P position to the R position.

Lock release button 64 is a device for mechanically releasing the shift-lock by lock mechanism 61 in accordance with the user's operation, regardless of the operation of lock release mechanism 62. Specifically, in such a case where power feeding from control device 26 to lock release mechanism 62 becomes impossible due to some abnormality and the shift-lock cannot be released, the shift-lock by lock mechanism 61 can be forcibly released by operating lock release button 64.

Fig. 3 is a functional block diagram of control device 26 shown in Fig. 1. Referring to Fig. 3, control device 26 includes a power supply control unit 112, an operation mode control unit 114, a charging control unit 116, a cable connection detecting unit 118, and a shift-lock control unit 120.

When either pilot signal CPLT outputted from CCID 34 (Fig. 1) or signal S 1 outputted from quick DC charging station 36 (Fig. 1) is detected, power supply control unit 112 determines that external charging is requested, and renders a signal IGP indicating startup of vehicle 100 caused by external charging active (e.g., H (logical high) level). Then, power supply control unit 112 outputs signal IGP to operation mode control unit 114 and shift-lock control unit 120.

When signal IGP received from power supply control unit 112 is rendered active, operation mode control unit 114 switches the operation mode of the vehicle to a charging mode. When signal IG is rendered active (e.g., when the ignition key is turned from an OFF position to a READY-ON position), operation mode control unit 114 switches the operation mode of the vehicle to a running mode. Unless the vehicle power supply is turned off or the CPU is reset, the operation mode is not switched. In other words, once the operation mode is switched to the charging mode, the operation mode is maintained in the charging mode even if the charging cable is pulled out or a power failure occurs at the external power supply during external charging.

When a mode signal MD outputted from operation mode control unit 114 indicates the charging mode and prescribed charging conditions are satisfied, charging control unit 116 executes the control of charging of power storage device 10 by the external power supply (external AC power supply 30 or quick DC charging station 36). Specifically, when charging by external AC power supply 30 is performed, charging control unit 116 generates control signal CNTL for driving charger 22 and outputs control signal CNTL to charger 22. In addition, when quick charging by quick DC charging station 36 is performed, charging control unit 116 monitors the state of charge of power storage device 10 and notifies quick DC charging station 36 about stop of charging.

Cable connection detecting unit 118 detects the connection state between inlet 20 and connector 32 based on connector connection signal PISW outputted from inlet 20 (Fig. 1). Cable connection detecting unit 118 also detects the connection state between quick DC charging inlet 24 and connector 38 based on connector connection signal C outputted from quick DC charging inlet 24 (Fig. 1). As one example of the connection state, any one of four states of "connected", "unconnected", "uncertain", and "abnormal" is detected. Then, cable connection detecting unit 118 outputs, to shift-lock control unit 120, a connection state signal CNCT indicating the connection state between inlet 20 and connector 32 as well as the connection state between quick DC charging inlet 24 and connector 38. When determining that the connection state between inlet 20 and connector 32 or the connection state between quick DC charging inlet 24 and connector 38 is "abnormal", cable connection detecting unit 118 outputs an alarm for notifying the user that the connection state is "abnormal".

Shift-lock control unit 120 receives connection state signal CNCT from cable connection detecting unit 118 and receives signal IGP from power supply control unit 112. Shift-lock control unit 120 also receives signal IG and brake signal BR. Based on these signals, shift-lock control unit 120 controls power feeding to lock release mechanism 62 for driving lock release mechanism 62 (Fig. 2) in interlock device 60 (i.e., releasing the shift-lock by lock mechanism 61) and stop of power feeding to lock release mechanism 62 for not driving lock release mechanism 62 (i.e., maintaining the shift-lock by lock mechanism 61), in accordance with a method described below.

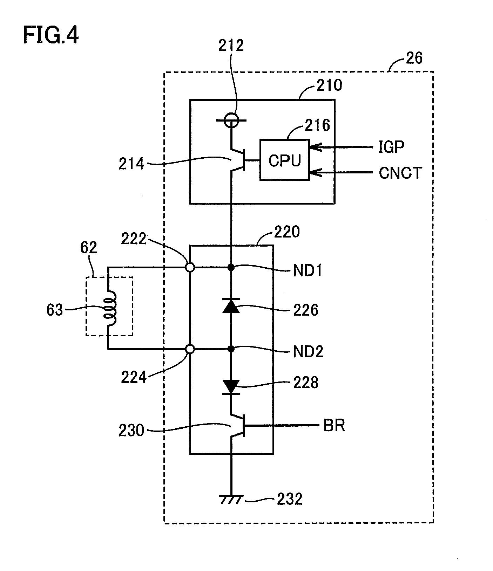

Fig. 4 is a diagram showing a specific configuration of control device 26 about a portion related to shift-lock control. Referring to Fig. 4, control device 26 includes a PHV-ECU 210 and a shift-lock ECU 220.

PHV-ECU 210 includes a power supply node 212, a switch 214 and a CPU 216. A voltage is applied to power supply node 212 from an auxiliary power supply (not shown) in accordance with signal IG rendered active. On/off of switch 214 is controlled by CPU 216. Power supply node 212 is connected to one end of switch 214, and when switch 214 is turned on by CPU 216, the voltage is applied from power supply node 212 to shift-lock ECU 220. Switch 214 is configured, for example, by a semiconductor switching element.

CPU 216 receives signal IGP and connection state signal CNCT. Signal IGP and connection state signal CNCT are described here as being generated outside CPU 216. Signal IGP and connection state signal CNCT may, however, be generated within CPU 216 by inputting pilot signal CPLT, signal S1, and connector connection signals PISW and C to CPU 216. CPU 216 controls on/off of switch 214 in accordance with a method described below.

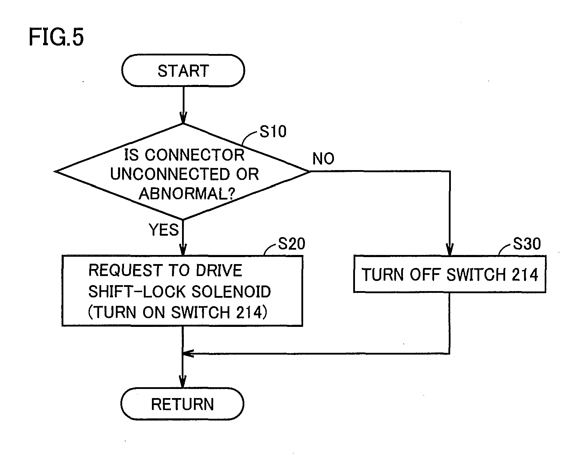

Fig. 5 is a flowchart for describing the operation of CPU 216 shown in Fig. 4. Referring to Figs. 4 and 5, based on connection state signal CNCT, CPU 216 determines whether connection between the connector of the charging cable and the vehicle-side inlet is undetected or not. Specifically, CPU 216 determines whether or not connector 32 of the charging cable of external AC power supply 30 (Fig. 1) is unconnected or abnormal, and whether or not connector 38 of the charging cable of quick DC charging station 36 (Fig. 1) is unconnected or abnormal (step S10).

If it is determined that connectors 32 and 38 are both unconnected or abnormal (YES in step S10), CPU 216 turns on switch 214 and thereby requests driving of a shift-lock solenoid 63 of lock release mechanism 62 (step S20). On the other hand, if it is determined in step S10 that at least one of connectors 32 and 38 is connected or uncertain (NO in step S10), CPU 216 turns off switch 214 (step S30). When it is determined that the connection state of the connector is abnormal, CPU 216 outputs an alarm for the user to notify the user that the connection state of the connector is abnormal.

Referring again to Fig. 4, shift-lock ECU 220 includes output ports 222 and 224, diodes 226 and 228, and a switch 230. An output line from PHV-ECU 210 is connected to a cathode of diode 226, and an anode of diode 228 is connected to an anode of diode 226. Switch 230 is connected between a cathode of diode 228 and a ground node 232. When the brake pedal is operated and thereby brake signal BR is rendered active (H level), switch 230 is turned on. Switch 230 is also configured, for example, by a semiconductor switching element. Shift-lock solenoid 63 of lock release mechanism 62 is connected between output ports 222 and 224.

With such a configuration, when an output of CPU 216 and brake signal BR are rendered active (H level) while the voltage is applied to power supply node 212 in accordance with signal IG rendered active, the current is supplied to shift-lock solenoid 63 of lock release mechanism 62 and the shift-lock by lock mechanism 61 is released. In other words, when the vehicle is started and signal IG is rendered active, and when it is determined that connectors 32 and 38 are both unconnected or abnormal, and when the brake pedal is operated, the current is supplied to shift-lock solenoid 63 and the shift-lock is released. As a result, the position change from the P position is permitted.

Signal IGP indicating that vehicle 100 has been started due to external charging may be used such that the shift-lock cannot be released during the charging mode.

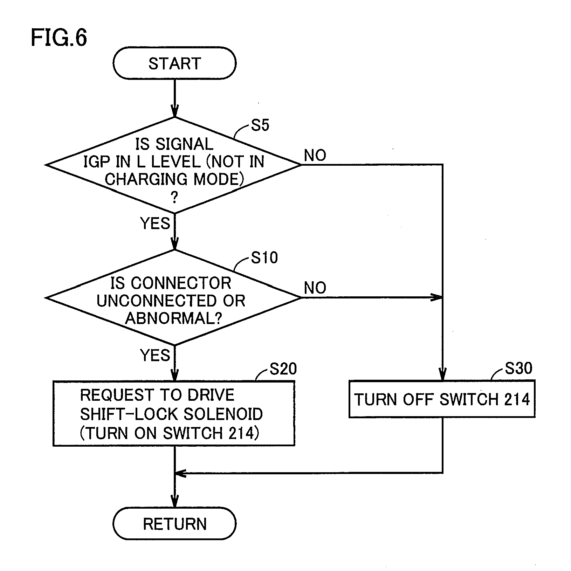

Fig. 6 is a flowchart for describing a modification of the operation of CPU 216. Referring to Fig. 6, this flowchart is different from the flowchart shown in Fig. 5 in that step S5 is further included. Specifically, CPU 216 determines whether signal IGP is in the inactive state (e.g., L (logical low) level) or not (step S5). Signal IGP is in the active state while the operation mode of the vehicle is the charging mode. In other words, signal IGP being in the inactive state (L level) means that the operation mode is not the charging mode.

If it is determined that signal IGP is in the L level, i.e., the operation mode is not the charging mode (YES in step S5), CPU 216 transfers the process to step S10 and the connection state of the connector is determined. On the other hand, if it is determined in step S5 that signal IGP is in the H level, i.e., the operation mode is the charging mode (NO in step S5), CPU 216 transfers the process to step S30 and switch 214 is turned off.

Referring again to Fig. 4, in this first embodiment, control device 26 is configured by PHV-ECU 210 and shift-lock ECU 220. Components common to those in a conventional vehicle that does not have the external charging function are used for shift-lock ECU 220. In other words, a shift-lock ECU in the conventional vehicle can be used as shift-lock ECU 220. In this first embodiment, a power supply of shift-lock ECU 220 is controlled by PHV-ECU 210. With such a configuration, the cost of development of shift-lock ECU 220 can be reduced and conditions for releasing the shift-lock can be designed in PHV-ECU 210 with a high degree of flexibility.

In addition, in this first embodiment, when it is determined that the connection state of connectors 32 and 38 is abnormal, turning on switch 214 by CPU 216 is permitted (switch 214 is turned on when signal IGP is not taken into consideration). In other words, when it is determined that the connection state of the connector is abnormal, the user is notified that the connection state is abnormal, and the request to drive shift-lock solenoid 63 is set to the permission side. As a result, the situation is avoided in which vehicle 100 cannot run when it is determined that connection of connectors 32 and 38 is abnormal. In addition, as shown in Fig. 6, when the operation mode is the charging mode, switch 214 is turned off and the shift-lock is maintained. In other words, in a state where external charging is restartable, the shift-lock is maintained.

As described above, in this first embodiment, the command for permitting the position change is outputted to interlock device 60 (i.e., the current is supplied to shift-lock solenoid 63) when vehicle 100 is started and the brake pedal is operated and connection of the charging cable is undetected (unconnected or abnormal). As a result, when connection of the charging cable is detected, the command for permitting the position change is not outputted to interlock device 60 (the current is not supplied to shift-lock solenoid 63) and the position change from the P position is prohibited, even if vehicle 100 is started and the brake pedal is operated. Therefore, according to this first embodiment, running of the vehicle while the charging cable remains connected to the vehicle can be prevented.

In addition, according to this first embodiment, PHV-ECU 210 and shift-lock ECU 220 form control device 26, and thus, the cost of development of shift-lock ECU 220 can be reduced and the conditions for releasing the shift-lock can be designed in PHV-ECU 210 with a high degree of flexibility.

In addition, according to this first embodiment, when it is determined that connection of connectors 32 and 38 is abnormal, the user is notified that connection is abnormal and the shift-lock can be released. Therefore, the situation can be avoided in which vehicle 100 cannot run when it is determined that connection of connectors 32 and 38 is abnormal. Furthermore, since the shift-lock is maintained when the operation mode is the charging mode, the shift-lock can be continued in the state where external charging is restartable.

### [Second Embodiment]

This second embodiment is different from the first embodiment in terms of a specific configuration of a control device about a portion related to the shift-lock control.

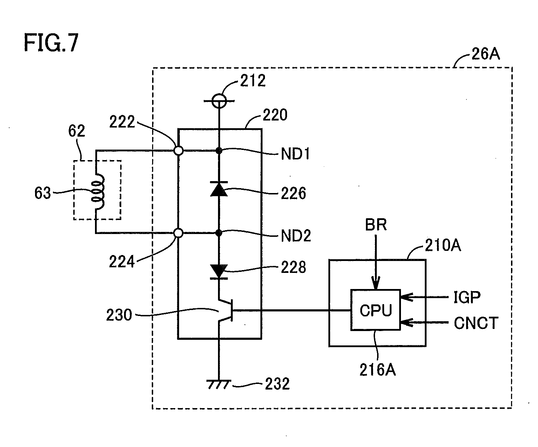

Fig. 7 is a diagram showing a specific configuration of a control device about a portion related to the shift-lock control in the second embodiment. Referring to Fig. 7, a control device 26A includes a PHV-ECU 210A and shift-lock ECU 220.

PHV-ECU 210A includes a CPU 216A. CPU 216A receives signal IGP and connection state signal CNCT. Signal IGP and connection state signal CNCT are described here as well as being generated outside CPU 216A. Signal IGP and connection state signal CNCT may, however, be generated within CPU 216A by inputting pilot signal CPLT, signal S1, and connector connection signals PISW and C to CPU 216A. CPU 216A further receives brake signal BR. CPU 216A controls on/off of switch 230 of shift-lock ECU 220 in accordance with a method described below. The configuration of shift-lock ECU 220 is as described with reference to Fig. 4.

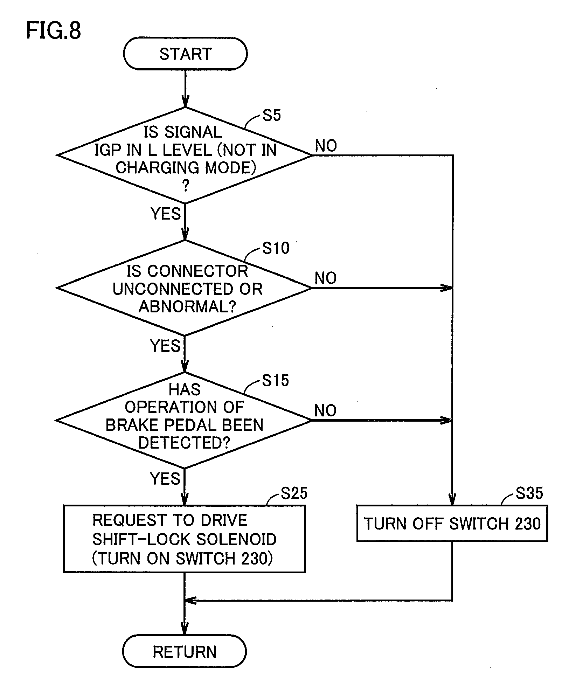

Fig. 8 is a flowchart for describing the operation of CPU 216A shown in Fig. 7. Referring to Fig. 8, this flowchart is different from the flowchart shown in Fig. 6 in that step S15 is further included and steps S25 and S35 are included instead of steps S20 and S30, respectively.

Specifically, if it is determined in step S10 that connectors 32 and 38 are both unconnected or abnormal (YES in step S10), CPU 216A determines whether the operation of the brake pedal has been detected or not, based on brake signal BR (step S15).

If it is determined that the operation of the brake pedal has been detected (YES in step S15), CPU 216A turns on switch 230 (Fig. 7) of shift-lock ECU 220 and thereby requests driving of shift-lock solenoid 63 (step S25). On the other hand, if it is determined in step S 15 that the operation of the brake pedal has not been detected (NO in step S15), CPU 216A turns off switch 230 (step S35).

Although the aforementioned flowchart includes step S5, the aforementioned flowchart may be a flowchart configured such that the flowchart shown in Fig. 5 further includes step S15 and includes steps S25 and S35 instead of steps S20 and S30, respectively.

As described above, this second embodiment can also provide the effects similar to those in the first embodiment. In addition, in this second embodiment, PHV-ECU 210A receives brake signal BR, and thus, the configuration of control device 26A can be simplified as compared with the first embodiment. Therefore, according to this second embodiment, the cost can be further reduced.

### [Third Embodiment]

This third embodiment is also different from the first embodiment in terms of a specific configuration of a control device about a portion related to the shift-lock control.

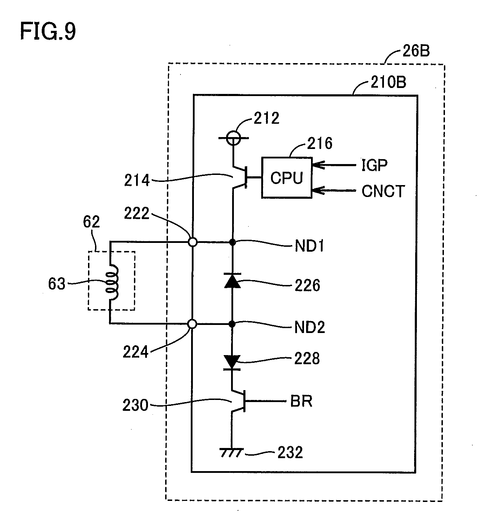

Fig. 9 is a diagram showing a specific configuration of a control device about a portion related to the shift-lock control in the third embodiment. Referring to Fig. 9, a control device 26B includes a PHV-ECU 210B. PHV-ECU 210B is formed by incorporating the configuration of shift-lock ECU 220 into PHV-ECU 210 shown in Fig. 4. The operation of CPU 216 is as shown in Figs. 5 and 6.

In this third embodiment, by incorporating the configuration of shift-lock ECU 220 into PHV-ECU 210B, the functions of PHV-ECU 210 and shift-lock ECU 220 in the first embodiment is implemented by one PHV-ECU 210B. Therefore, according to this third embodiment, the effects similar to those in the first embodiment can be obtained, and the number of components can be reduced and thus the cost can be reduced.

In each of the aforementioned embodiments, either external AC power supply 30 or quick DC charging station 36 is selected to charge power storage device 10. The present invention may, however, be configured such that external charging by only one of external AC power supply 30 and quick DC charging station 36 is possible.

In addition, in each of the aforementioned embodiments, switches 214 and 230 are each configured, for example, by a semiconductor switching element. Switches 214 and 230 may be each configured by a contact relay.

It should be understood that the embodiments disclosed herein are illustrative and not limitative in any respect. The scope of the present invention is defined by the terms of the claims, rather than the description above of the embodiments, and is intended to include any modifications within the scope and meaning equivalent to the terms of the claims.

### REFERENCE SIGNS LIST

10 power storage device; 12 converter; 14 inverter; 16 motor generator; 18 driving wheel; 20 inlet; 22 charger; 24 quick DC charging inlet; 26, 26A, 26B control device; 28 shift selecting unit; 30 external AC power supply; 32, 38 connector; 36 quick DC charging station; 50 lever guide path; 52 to 58 lever position; 60 interlock device; 61 lock mechanism; 62 lock release mechanism; 63 shift-lock solenoid; 64 lock release button; 112 power supply control unit; 114 operation mode control unit; 116 charging control unit; 118 cable connection detecting unit; 120 shift-lock control unit; 210, 210A, 210B PHV-ECU; 212 power supply node; 214, 230 switch; 216, 216A, 216B CPU; 220 shift-lock ECU; 222, 224 output port; 226, 228 diode; 232 ground node; ND1, ND2 node.

## Claims

1. A shift-lock apparatus for a vehicle including a shift selecting mechanism (28) for selecting one of a plurality of shift positions including a parking position, said vehicle (100) being configured such that a vehicle-mounted power storage device (10) can be charged through a charging cable by a power supply (30, 36) external to the vehicle, the shift-lock apparatus comprising:
an interlock device (60) for prohibiting a position change from said parking position in said shift selecting mechanism; and
a control unit (26, 26A, 26B) that outputs a command for permitting said position change to said interlock device when said vehicle is started and a brake pedal of said vehicle is operated and connection between said charging cable and said vehicle is undetected.

2. The shift-lock apparatus for a vehicle according to claim 1, wherein
said vehicle can operate in a running mode or in a charging mode,
an operation mode is switched to said charging mode when charging of said power storage device by said power supply is requested, and said operation mode is switched to said running mode when running of said vehicle is requested, and
said control unit stops output of said command to said interlock device when said operation mode is said charging mode.

3. The shift-lock apparatus for a vehicle according to claim 2, wherein
when determining that a connection state between said charging cable and said vehicle is abnormal, said control unit outputs an alarm for notifying a user that said connection state is abnormal, and
said control unit outputs said command to said interlock device when said vehicle is started and said brake pedal is operated in a case where it is determined that said connection state is abnormal.

4. The shift-lock apparatus for a vehicle according to claim 3, wherein
said interlock device includes:
a lock mechanism (61) for blocking movement of a shift lever from said parking position; and
a lock release mechanism (62) for releasing, by receiving current supply, blockage of movement of said shift lever by said lock mechanism, and
said control unit supplies a current to said lock release mechanism when said vehicle is started and said brake pedal is operated and connection between said charging cable and said vehicle is undetected.

5. The shift-lock apparatus for a vehicle according to claim 4, wherein
said control unit (26) includes:
a first electronic control device (210) that receives a first state signal indicating whether said operation mode is said charging mode or not and a second state signal indicating whether said charging cable has been connected to said vehicle or not; and
a second electronic control device (220) that receives a third state signal indicating whether said brake pedal has been operated or not,
said first electronic control device supplies the current to said second electronic control device when, during startup of said vehicle, said first state signal indicates that said operation mode is not said charging mode and said second state signal indicates that said charging cable and said vehicle are not connected, and
said second electronic control device supplies the current to said lock release mechanism when said second electronic control device receives the current supply from said first electronic control device and said third state signal indicates that said brake pedal has been operated.

6. The shift-lock apparatus for a vehicle according to claim 4, wherein
said control unit (26A) includes:
a first electronic control device (210A) that receives a first state signal indicating whether said operation mode is said charging mode or not, a second state signal indicating whether said charging cable has been connected to said vehicle or not, and a third state signal indicating whether said brake pedal has been operated or not; and
a second electronic control device (220) that receives a signal from said first electronic control device,
said first electronic control device renders said signal outputted to said second electronic control device active when said first state signal indicates that said operation mode is not said charging mode, and said second state signal indicates that said charging cable and said vehicle are not connected, and said third state signal indicates that said brake pedal has been operated, and
said second electronic control device supplies the current to said lock release mechanism when said signal received from said first electronic control device is rendered active during startup of said vehicle.

7. The shift-lock apparatus for a vehicle according to claim 4, wherein
said control unit (26B) includes an electronic control device (210B) that receives a first state signal indicating whether said operation mode is said charging mode or not, a second state signal indicating whether said charging cable has been connected to said vehicle or not, and a third state signal indicating whether said brake pedal has been operated or not, and
said electronic control device supplies the current to said lock release mechanism when, during startup of said vehicle, said first state signal indicates that said operation mode is not said charging mode, and said second state signal indicates that said charging cable and said vehicle are not connected, and said third state signal indicates that said brake pedal has been operated.

8. The shift-lock apparatus for a vehicle according to any one of claims 1 to 7, further comprising:
an operation unit (64) for mechanically releasing prohibition of said position change by said interlock device in accordance with user's operation.
